# FASCICULE DE BREVET EUROPEEN

(11) **EP 1 603 760 B1**
(45) Date de publication et mention de la délivrance du brevet: **10.11.2010**
(21) Numéro de dépôt: 04714351.6
(22) Date de dépôt: 25.02.2004
(51) Int. Cl.: B60B 37/10

(54) **DISPOSITIF DE MONTAGE D'UNE STRUCTURE ROTATIVE SUR UN AXE**
MONTAGEVORRICHTUNG EINER DREHBAREN ANORDNUNG AUF EINER ACHSE
DEVICE FOR MOUNTING A ROTATING STRUCTURE ON AN AXLE

(30) Priorité: 28.02.2003 FR 0302492
(43) Date de publication de la demande: 14.12.2005
(73) Titulaire: Dreyer, Jean-Luc, 67140 Barr (FR)
(72) Inventeur: Dreyer, Jean-Luc, 67140 Barr (FR)
(74) Mandataire: Nuss, Pierre
(86) Numéro de dépôt international: PCT/FR2004/000425
(87) Numéro de publication internationale: WO 2004/078493

(56) Documents cités:
- FR-A- 2 727 061
- US-A- 5 368 371
- US-B1- 6 170 920

## Description

La présente invention concerne le domaine du montage de structures rotatives, notamment de pièces creuses en matière synthétique, en particulier de roues, volants et toutes autres pièces creuses formant un anneau circulaire ou non sur un axe, et a pour objet un dispositif de montage d'une structure rotative sur un axe.

L'invention concerne également un objet ou engin roulant comportant au moins une structure de roue montée sur un axe par mise en oeuvre de ce dispositif de montage.

De telles structures de roues peuvent être, par exemple, réalisées suivant un procédé de fabrication tel que décrit dans la demande de brevet français n° 02 05467 déposée le 30 avril 2002 par le demandeur, ainsi que dans le brevet français n° 98 16290 déposé le 21 décembre 1998 par le demandeur (n° de publication : 2 787 382). Ces procédés permettent notamment de fabriquer des structures de roues en un matériau recyclable tel que par exemple du polyéthylène haute densité.

Pour le montage de telles structures de roues sur un axe, celles-ci présentent actuellement un plot métallique encliqueté dans un orifice du moyeu et destiné à s'encliqueter dans une gorge ou rainure de l'axe prévue à cet effet.

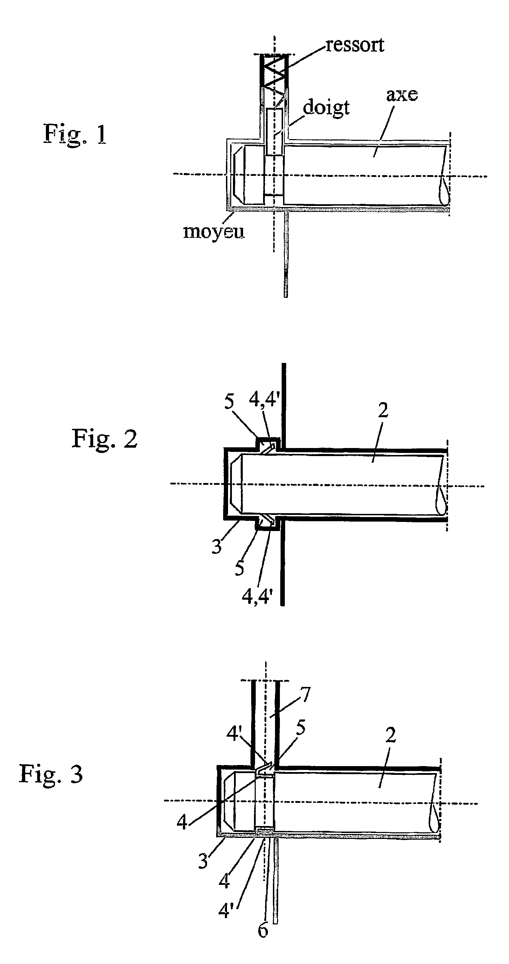

Un autre moyen de fixation des structures de roues sur un axe consiste à utiliser un doigt rétractable actionné par un ressort qui s'engage dans une rainure de l'axe prévue à cet effet. Ce doigt est guidé en translation dans un orifice du moyeu de la roue (voir figure 1).

L'inconvénient de ces deux types de montage de la structure de roue sur un axe réside dans le fait qu'ils nécessitent l'utilisation de pièces métalliques telles que le doigt, le plot et le ressort. Il s'ensuit que la structure de roue avec ses moyens de montage et de retenue sur l'axe n'est pas totalement recyclable et nécessite donc un démontage et un tri des pièces métalliques avant l'opération de recyclage. Ceci engendre une augmentation des coûts liés au recyclage, ainsi qu'une perte de temps due à l'étape supplémentaire de démontage et de tri.

FR-A-2 727 061 décrit un dispositif de montage d'une structure rotative sur un axe conforme au préambule de la revendication 1. Un tel dispositif ne permet cependant pas la mise en oeuvre d'un moyen de retenue de l'axe dans le moyeu ou du moyeu sur l'axe qui est indépendant dudit moyeu ou dudit axe de la roue.

La présente invention a notamment pour but de surmonter ces inconvénients et de proposer un dispositif de montage d'une structure de roue sur un axe présentant une constitution simple et d'un coût de revient faible, ne comportant aucune pièce métallique et s'adaptant éventuellement aux structures de roues et/ou aux axes existants.

A cet effet, l'invention a pour objet un dispositif de montage d'une structure rotative selon la revendication 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en coupe transversale représentant une structure de roue actuelle montée sur un axe ;
la figure 2, est une vue en coupe transversale représentant un dispositif de montage d'une structure de roue sur un axe ;
la figure 3 est une vue en coupe transversale représentant un dispositif de montage d'une structure de roue sur un axe selon un premier mode de réalisation l'invention ;
la figure 4 est une vue en coupe transversale représentant un dispositif de montage d'une structure de roue sur un axe ;
la figure 5 est une vue en perspective d'un moyen de retenue de l'axe dans le moyeu selon l'invention, et
la figure 6 est une vue en élévation latérale et partiellement en coupe d'une roue de section annulaire creuse pouvant être montée sur un axe par l'intermédiaire du dispositif de montage de l'invention.

Les figures 2 à 4 des dessins annexés représentent, à titre d'exemple, un dispositif de montage d'une structure rotative 1 sur un axe 2, ladite structure rotative, préférentiellement sous la forme d'une roue, comportant un moyeu 3 sous forme de manchon creux à section circulaire et ledit axe 2 étant monté par emboîtement axial dans ledit moyeu 3.

Conformément à l'invention, l'axe 2 ou le moyeu 3 est pourvu d'au moins un moyen de retenue 4 de l'axe 2 dans le moyeu 3 ou du moyeu 3 sur l'axe 2 réalisé en un matériau synthétique recyclable, comprenant au moins une patte ou une ailette 4' élastiquement déformable venant automatiquement en engagement dans au moins un renfoncement 5 du moyeu 3 ou de l'axe 2, lorsque ces derniers se situent dans un positionnement axial déterminé l'un par rapport à l'autre.

Ledit positionnement axial prédéterminé du moyeu 3 par rapport à l'axe 2 correspond à une position de butée dans laquelle le ou les moyens de retenue 4 s'encliquète(nt) dans le ou les renfoncement(s) 5 correspondant(s) du moyeu 3 ou de l'axe 2, assurant ainsi le maintien de l'axe 2 dans le moyeu 3 par une solidarisation axiale résultant d'un enclenchement automatique de la ou des patte(s) ou ailette(s) 4' dans le ou les renfoncement(s) 5.

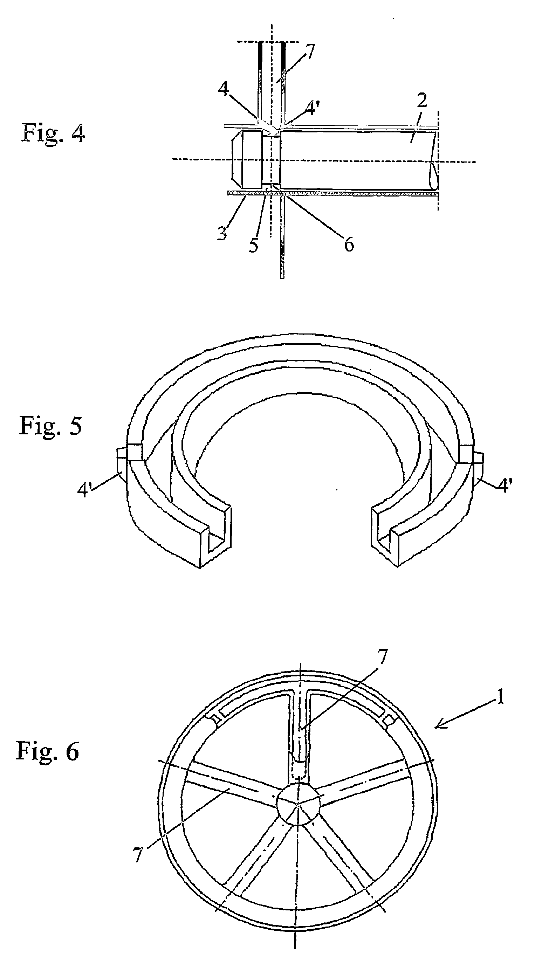

Le dispositif de montage de l'invention permet, par exemple, de monter sur un axe 2 une roue de section annulaire creuse, telle que représentée sur la figure 6.

Selon une caractéristique de l'invention, ladite au moins une patte ou ailette 4' peut se trouver soit, en l'absence de contrainte, dans un état déployé dans lequel elle s'étend radialement de manière protubérante à partir de la surface extérieure de l'axe 2 ou de la surface intérieure du moyeu 3, soit, sous contrainte, dans un état replié contre la surface extérieure de l'axe 2 ou contre la surface intérieure du moyeu 3, en étant en appui sur la surface intérieure du moyeu 3 ou sur de la surface extérieure de l'axe 2, l'opération de montage comprenant au moins une phase dans laquelle ladite au moins une patte ou ailette 4' est repliée sous contrainte, suivie d'une phase dans laquelle ladite au moins une patte ou ailette 4' est déployée sans contrainte, ladite deuxième phase correspondant à l'enclenchement élastique de ladite au moins une patte ou ailette 4' dans ledit au moins un renfoncement 5 et le passage de la première à la deuxième phase s'effectuant par un déplacement axial relatif entre le moyeu 3 et l'axe 2.

La figure 3 représente les deux états possibles que peut prendre chaque patte ou ailette 4'. Dans cette figure, une première patte ou ailette 4', située dans le renfoncement 5 correspondant du moyeu 3, est déployée car elle ne se trouve sous l'effet d'aucune contrainte, tandis que l'autre patte ou ailette 4' est dans un état replié, sous contrainte en appui sur la surface intérieure du moyeu 3.

Selon une première variante de réalisation de l'invention, le dispositif de montage peut comporter au moins un renfoncement 5, localisé ou s'étendant circonférentiellement au niveau de la surface intérieure du moyeu 3 ou de la surface extérieure de l'axe 2, le moyen de retenue 4 comprenant une ou plusieurs patte(s) ou ailette(s) 4' élastique(s), le cas échéant, répartie(s) circonférentiellement et adaptée(s) pour venir en engagement chacune, le cas échéant, dans un renfoncement 5 correspondant, lorsque le moyeu 3 et l'axe 2 se situent dans un positionnement axial déterminé l'un par rapport à l'autre.

Selon une deuxième variante de réalisation de l'invention, le dispositif de montage peut comporter au moins deux, préférentiellement plusieurs, renfoncements 5, répartis circonférentiellement au niveau de la surface intérieure du moyeu 3 ou de la surface extérieure de l'axe 2, le moyen de retenue 4 comprenant une unique patte ou ailette 4' élastique ou plusieurs pattes ou ailettes 4' réparties circonférentiellement, adaptée(s) pour venir en engagement chacune, le cas échéant, dans un renfoncement 5 correspondant lorsque le moyeu 3 et l'axe 2 se situent dans un positionnement axial déterminé l'un par rapport à l'autre.

Selon le nombre de renfoncements 5 et de pattes ou d'ailettes 4', le déplacement axial relatif entre le moyeu 3 et l'axe 2 lors de la deuxième phase du montage décrite ci-dessus est différent. En effet, dans le cas où le dispositif de montage présente un unique renfoncement 5 s'étendant circonférentiellement au niveau de la surface intérieure du moyeu 3 ou de la surface extérieure de l'axe 2, une translation de l'axe 2 dans le moyen 3 suffit à l'engagement de chaque patte ou ailette 4' dans ledit unique renfoncement 5. Le montage est ainsi réalisé pour le dispositif de montage représenté sur la figure 4, dans lequel l'axe 2 comporte un unique renfoncement 5 réalisé sous la forme d'une rainure s'étendant circonférentiellement au niveau de la surface extérieure de l'axe 2, dans laquelle s'engage l'extrémité du moyen de retenue 4, ainsi que pour le dispositif de montage représenté sur la figure 2, dans lequel le moyen de retenue 4 s'engage dans l'unique renfoncement 5 s'étendant circonférentiellement au niveau de la surface intérieure du moyeu 3. La figure 2 représente un dispositif de montage comportant un unique renfoncement 5 s'étendant de manière circonférentielle au niveau de la surface intérieure du moyeu 3 et dans lequel le montage de l'axe 2 dans le moyeu 3 se fait par translation de l'axe 2 dans le moyen 2 jusqu'à l'enclenchement du moyen de retenue 4 dans l'unique renfoncement.

Lorsque le dispositif de montage comporte un unique renfoncement 5 localisé (voir figure 3), il peut être avantageux de disposer de plusieurs pattes ou d'ailettes 4'. En effet, les pattes ou ailettes 4', pour lesquelles ne correspondent pas de renfoncements 5 dans lesquels elles peuvent se déployer, se retrouvent repliées, sous contrainte, contre la surface extérieure de l'axe 2 ou contre la surface intérieure du moyeu 3 et assurent ainsi, par cette compression, un meilleur maintien de la patte ou ailette 4' dans le renfoncement 5 correspondant.

Dans le cas où le dispositif de montage comporte un renfoncement localisé ou plusieurs renfoncements 5 répartis circonférentiellement, le déplacement axial relatif entre le moyeu 3 et l'axe 2 lors de la deuxième phase du montage consiste en une translation de l'axe 2 dans le moyen 3, suivie d'une rotation de l'axe 2 par rapport au moyeu 3, afin de mettre en regard le ou les renfoncement(s) 5 avec la ou les patte(s) ou ailette(s).

Selon un premier mode de réalisation de l'invention, le moyen de retenue 4 est un élément séparé rapporté sur l'axe 2 avant emboîtement dans le moyeu 3. Comme représenté sur la figure 5 annexée, le moyen de retenue 4 peut préférentiellement se présenter sous la forme d'une pièce élastiquement déformable réalisée sous la forme d'une portion de bague en C présentant une section transversale en U et comportant au niveau de son aile extérieure au moins une partie en décrochement ou crevée formant la ou les patte(s) ou ailette(s) 4', ledit moyen de retenue 4 étant monté dans une rainure 6 de l'axe 2. Afin d'assurer un bon maintien de l'axe 2 dans le moyeu 3 la pièce élastiquement déformable peut préférentiellement présenter deux parties en décrochement ou crevées. Les caractéristiques élastiques de cette pièce seront choisies pour permettre son montage sur l'axe 2 et afin qu'elle retrouve sa forme initiale après ledit montage. Le matériau de réalisation de la pièce rapportée pourra être le matériau identique à celui de la roue et/ou de l'axe 2, par exemple du polyéthylène à haute densité, du polypropylène ou analogue. Cette pièce assure l'adaptation du dispositif de montage sur tous les axes présentant une rainure 6.

Le moyen de retenue 4 peut egalement etre formé d'un seul tenant par moulage avec le moyeu 3 ou avec l'axe 2. La structure de roue 1 peut, de préférence, présenter au moins un rayon creux 7 formé d'un seul tenant avec le moyeu 3 et débouchant sur ce dernier au niveau d'une partie de paroi de fermeture formant un moyen de retenue 4 se terminant par une portion libre formant une patte ou une ailette 4', destinée à venir en engagement dans un renfoncement 5 correspondant de l'axe 2 lorsque le moyeu 3 et l'axe 2 se situent dans un positionnement axial déterminé l'un par rapport à l'autre. Cette structure, représenté sur la figure 4, permet d'éviter le montage d'une pièce rapportée sur une rainure 6 de l'axe 2.

Le rayon creux 7 peut être, par exemple, réalisé par moulage à l'aide d'un noyau ou par toute autre technique décrite dans les dépôts cités plus haut. La portion libre formant une patte ou une ailette 4' peut être réalisée par l'utilisation de deux demi noyaux lors du moulage de la structure de roue 1, par exemple. La partie de paroi de fermeture se présente préférentiellement sous la forme d'une structure en crochet qui assure le maintien ou blocage de l'axe 2 dans le moyeu 3 ou du moyeu sur l'axe, ce, dans les deux directions axiales (voir figure 4). Ainsi, après encliquetage de la patte ou de l'ailette 4' dans la rainure 6 de l'axe 2, ce dernier et le moyeu sont solidarisés axialement avec un certain jeu, tout en autorisant une rotation libre du moyeu 3 autour de l'axe, comme dans les autres variantes de réalisation présentées dans les figures 2 et 3. En outre, il est possible de prévoir la fixation d'un élément tel qu'une couverture (non représentée) au niveau de l'extrémité libre du moyeu 3 pour éviter que des salissures ou poussières ne pénètrent dans le moyeu 3.

La figure 2 représente un dispositif de montage dans lequel le moyen de retenue 4 est formé d'un seul tenant avec l'axe 2. Dans ce dispositif, on peut recouvrir l'axe 2 avec un matériau recyclable, tel que par exemple du polyéthylène haute densité ou du polypropylène, ou le réaliser entièrement avec ce matériau, pour faciliter le recyclage du dispositif de montage.

Comme représenté dans les figures 2 et 3, dans lesquelles le moyen de retenue 4 est une pièce formée d'un seul tenant avec l'axe 2 ou est une pièce rapportée sur l'axe, la structure de roue 1 peut avantageusement présenter au moins un rayon creux 7 formé d'un seul tenant avec le moyeu 3 et débouchant sur ce dernier, l'ouverture débouchante formant un renfoncement 5 (voir figure 3). La section de l'ouverture débouchante peut être circulaire ou non. La fabrication du rayon creux 7 d'un seul tenant avec le moyeu 3 peut se faire, par exemple, suivant le procédé de fabrication décrit dans les dépôts cités plus haut.

L'invention concerne également un objet ou engin comportant au moins une structure de roue 1 vélocipède, **caractérisé en ce que** chaque structure de roue 1 est montée sur un axe 2 par l'intermédiaire du dispositif de montage selon l'invention. Ces structures de roues 1 peuvent par exemple être réalisées selon le procédé de fabrication décrit dans les dépôts cités plus haut. Ces structures de roues peuvent être montées, par exemple, sur des tricycles pour enfants, des conteneurs, des tondeuses, ou autres objets ou engins destinés à se déplacer par l'intermédiaire d'une ou plusieurs structures de roues 1.

Grâce à l'invention, il est possible de réaliser une structure de roue avec ses moyens de montage et de retenue sur l'axe entièrement recyclable qui ne nécessite aucune opération de tri avant le recyclage.

Bien entendu, l'invention n'est pas limitée au mode de réalisation décrit et représenté aux dessins annexés. Des modifications restent possibles, notamment du point de vue de la constitution des divers éléments, sans sortir pour autant du domaine de protection de l'invention, défini par les revendications.

## Revendications

1. Dispositif de montage d'une structure rotative préférentiellement sous la forme d'une roue, sur un axe, comportant un moyeu sous forme de manchon creux à section circulaire et ledit axe étant monté par emboîtement axial dans ledit moyeu, l'axe (2) ou le moyeu (3) étant pourvu d'au moins un moyen de retenue (4) de l'axe (2) dans le moyeu (3) ou du moyeu (3) sur l'axe (2), réalisé en un matériau synthétique recyclable, comprenant au moins une patte ou une ailette (4') élastiquement déformable venant automatiquement en engagement dans au moins un renfoncement (5) du moyeu (3) ou de l'axe (2), lorsque ces derniers se situent dans un positionnement axial déterminé l'un par rapport à l'autre, **caractérisé en ce que** le moyen de retenue (4) de l'axe (2) dans le moyeu (3) ou du moyeu (3) sur l'axe (2) est indépendant du moyeu (3) et de l'axe (2).

2. Dispositif de montage, selon la revendication 1, **caractérisé en ce que** ladite au moins une patte ou ailette (4') se trouve soit, en l'absence de contrainte, dans un état déployé dans lequel elle s'étend radialement de manière protubérante à partir de la surface extérieure de l'axe (2) ou de la surface intérieure du moyeu (3), soit, sous contrainte, dans un état replié contre la surface extérieure de l'axe (2) ou contre la surface intérieure du moyeu (3), en étant en appui sur la surface intérieure du moyeu (3) ou sur de la surface extérieure de l'axe (2), l'opération de montage comprenant au moins une phase dans laquelle ladite au moins une patte ou ailette (4') est repliée sous contrainte, suivie d'une phase dans laquelle ladite au moins une patte ou ailette (4') est déployée sans contrainte, ladite deuxième phase correspondant à l'enclenchement élastique de ladite au moins une patte ou ailette (4') dans ledit au moins un renfoncement (5) et le passage de la première à la deuxième phase s'effectuant par un déplacement axial relatif entre le moyeu (3) et l'axe (2).

3. Dispositif de montage, selon la revendication 2, **caractérisé en ce qu'**il comporte au moins un renfoncement (5), localisé ou s'étendant circonférentiellement au niveau de la surface intérieure du moyeu (3) ou de la surface extérieure de l'axe (2), le moyen de retenue (4) comprenant une ou plusieurs patte(s) ou ailette(s) (4') élastique(s), le cas échéant, répartie(s) circonférentiellement et adaptée(s) pour venir en engagement chacune, le cas échéant, dans un renfoncement (5) correspondant, lorsque le moyeu (3) et l'axe (2) se situent dans un positionnement axial déterminé l'un par rapport à l'autre.

4. Dispositif de montage, selon la revendication 2, **caractérisé en ce qu'**il comporte au moins deux, préférentiellement plusieurs, renfoncements (5), répartis circonférentiellement au niveau de la surface intérieure du moyeu (3) ou de la surface extérieure de l'axe (2), le moyen de retenue (4) comprenant une unique patte ou ailette (4') élastique ou plusieurs pattes ou ailettes (4') réparties circonférentiellement, adaptée(s) pour venir en engagement chacune dans un renfoncement (5) correspondant lorsque le moyeu (3) et l'axe (2) se situent dans un positionnement axial déterminé l'un par rapport à l'autre.

5. Dispositif de montage d'une structure de roue sur un axe, selon l'une quelconque des revendications 1 à 4, **caractérisé en ce que** le moyen de retenue (4) est un élément séparé rapporté sur l'axe (2) avant emboîtement dans le moyeu (3).

6. Dispositif de montage, selon la revendication 5, **caractérisé en ce que** le moyen de retenue (4) se présente sous la forme d'une pièce élastiquement déformable réalisée sous la forme d'une portion de bague en C présentant une section transversale en U et comportant au niveau de son aile extérieure au moins une partie en décrochement ou crevée formant la ou les patte(s) ou ailette(s) (4'), ledit moyen de retenue (4) étant monté dans une rainure (6) de l'axe (2).

7. Dispositif de montage, selon l'une quelconque des revendications 1 à 6, **caractérisé en ce que** la structure de roue (1) présente au moins un rayon creux (7) formé d'un seul tenant avec le moyeu (3) et débouchant sur ce dernier, l'ouverture débouchante formant un renfoncement (5).

8. Objet ou engin comportant au moins une structure de roue, **caractérisé en ce que** chaque structure de roue (1) est montée sur un axe (2) par l'intermédiaire d'un dispositif de montage suivant l'une quelconque des revendications 1 à 7.

## Claims

1. Device for assembling a rotatable structure, preferably in the form of a wheel, on an axle, comprising a hub in the form of a hollow sleeve with a circular cross-section and said axle being mounted in an axial socket in said hub, wherein the axle (2) or the hub (3) is provided with at least one holding means (4) for the axle (2) in the hub (3) or the hub (3) on the axle (2), made of a recyclable synthetic material, comprising at least one resiliently deformable tongue or fin (4') that automatically comes into engagement in at least one recess (5) of the hub (3) or the axle (2), when the latter are located in a predetermined axial position relative to each other, **characterised in that** the holding means (4) of the axle (2) in the hub (3) or the hub (3) on the axle (2) is independent from the hub (3) and the axle (2).

2. Assembly device according to claim 1, **characterised in that** said at least one tongue or fin (4') is located either, in the absence of stress, in a deployed position in which it extends radially protruding from the external surface of the axle (2), or of the internal surface of the hub (3), or, under stress, in a bent condition against the external surface of the axle (2) or against the internal surface of the hub (3), by bearing against the internal surface of the hub (3) or against the external surface of the axle (2), the assembly operation comprising at least one phase in which said at least one tongue or fin (4') is bent under stress, followed by a phase in which said at least one tongue or fin (4') is extended without stress, said second phase corresponding to the resilient engagement of said at least one tongue or fin (4') in said at least one recess (5) and the passage from the first to the second phase taking place by relative axial movement between the hub (3) and the axle (2).

3. Assembly device according to claim 2, **characterised in that** it comprises at least one recess (5), which is localised or extends circumferentially about the internal surface of the hub (3) or of the external surface of the axle (2), the holding means (4) comprising one or several tongue or tongues or fin or fins (4') that are resilient, as necessary distributed circumferentially and adapted to each come into engagement, as the case may be, in a corresponding recess (5), when the hub (3) and the axle (2) are located in a predetermined axial position relative to each other.

4. Assembly device according to claim 2, **characterised in that** it comprises at least two, preferably several, recesses (5), distributed circumferentially about the internal surface of the hub (3) or the external surface of the axle (2), the holding means (4) comprising a single resilient tongue or fin (4') or several tongues or fins (4') distributed circumferentially, adapted to each come into engagement in a corresponding recess (5) when the hub (3) and the axle (2) are located in a predetermined axial position relative to each other.

5. Assembly device for a wheel structure on an axle, according to any one of claims 1 to 4, **characterised in that** the holding means (4) is a separate element secured to the axle (2) before engagement in the hub (3).

6. Assembly device according to claim 5, **characterised in that** the holding means (4) is in the form of a resiliently deformable member in the form of a portion of a C-shaped ring having a transverse U-shaped cross-section and comprising on its outer leg at least one protruding or sunk portion forming the tongue or tongues or fin or fins (4'), said holding means (4) being mounted in a groove (6) on the axle (2).

7. Assembly device according to any one of claims 1 to 6, **characterised in that** the wheel structure (1) has at least one hollow radial (7) formed in a single piece with the hub (3) and opening onto this latter, the opening forming a recess (5).

8. Object or machine comprising at least one wheel structure, **characterised in that** each wheel structure (1) is mounted on an axle (2) by means of an assembly device according to any one of claims 1 to 7.

## Patentansprüche

1. Vorrichtung zur Montage einer drehbaren Struktur, vorzugsweise in Form eines Rades, auf einer Achse, umfassend eine Nabe in Form einer hohlen Hülse mit kreisförmigem Querschnitt, wobei die Achse durch axiales Einfügen in die Nabe montiert ist, wobei die Achse (2) oder die Nabe (3) mit mindestens einem Haltemittel (4) der Achse (2) in der Nabe (3) oder einem Haltemittel der Nabe (3) auf der Achse (2) versehen ist, das aus einem recycelbaren synthetischen Material hergestellt ist, umfassend mindestens ein Befestigungsstück oder einen Flügel (4'), der/das elastisch verformbar ist und automatisch in mindestens eine Vertiefung (5) der Nabe (3) oder der Achse (2) eingreift, wenn sich diese letztgenannten in einer bestimmten Axialpositionierung zueinander befinden, **dadurch gekennzeichnet, dass** das Haltemittel (4) der Achse (2) in der Nabe (3) oder das Haltemittel (4) der Nabe (3) auf der Achse (2) von der Nabe (3) und der Achse (2) unabhängig ist.

2. Vorrichtung zur Montage nach Anspruch 1, **dadurch gekennzeichnet, dass** das mindestens eine Befestigungsstück oder der mindestens eine Flügel (4') entweder bei Abwesenheit einer Spannung in einem ausgefahrenen Zustand ist, in dem es(er) sich radial von der Außenfläche der Achse (2) oder der Innenseite der Nabe (3) hervorstehend erstreckt, oder unter Spannung in einem an die Außenseite der Achse (2) oder an die Innenseite der Nabe (3) eingefahrenen Zustand ist, wobei das Befestigungsstück oder der Flügel auf der Innenseite der Nabe (3) oder auf der Außenseite der Achse (2) abgestützt ist, wobei der Montagevorgang mindestens eine Phase umfasst, in der das mindestens eine Befestigungsstück oder der mindestens eine Flügel (4') unter Spannung eingefahren ist, gefolgt von einer Phase, in der das mindestens eine Befestigungsstück oder der Flügel (4') ohne Spannung ausgefahren ist, wobei die zweite Phase dem elastischen Eingerastet Sein des mindestens einen Befestigungsstücks oder Flügels (4') in die mindestens eine Vertiefung (5) entspricht, und wobei der Übergang von der ersten in die zweite Phase durch eine relative Axialverschiebung zwischen der Nabe (3) und der Achse (2) erfolgt.

3. Vorrichtung zur Montage nach Anspruch 2, **dadurch gekennzeichnet, dass** sie mindestens eine Vertiefung (5) umfasst, die sich am Umfang im Bereich der Innenseite der Nabe (3) oder der Außenseite der Achse (2) erstreckt oder lokalisiert ist, wobei das Haltemittel (4) ein oder mehrere elastische Befestigungsstücke oder Flügel (4') umfasst, die gegebenenfalls am Umfang verteilt und dazu vorgesehen sind, gegebenenfalls jeweils in eine entsprechende Vertiefung (5) einzugreifen, wenn sich die Nabe (3) und die Achse (2) in einer bestimmten Axialpositionierung zueinander befinden.

4. Vorrichtung zur Montage nach Anspruch 2, **dadurch gekennzeichnet, dass** sie mindestens zwei, vorzugsweise mehrere Vertiefungen (5) umfasst, die am Umfang im Bereich der Innenseite der Nabe (3) oder der Außenseite der Achse (2) angeordnet sind, wobei das Haltemittel (4) ein einziges elastisches Befestigungsstück oder einen einzigen elastischen Flügel (4') oder mehrere am Umfang verteilte Befestigungsstücke oder Flügel (4') umfasst, die dazu vorgesehen sind, jeweils in eine entsprechende Vertiefung (5) einzugreifen, wenn sich die Nabe (3) und die Achse (2) in einer bestimmten Axialpositionierung zueinander befinden.

5. Vorrichtung zur Montage für eine Radstruktur auf einer Achse nach einem der Ansprüche 1 bis 4, **dadurch gekennzeichnet, dass** das Haltemittel (4) ein getrenntes Element ist, das auf die Achse (2) vor dem Einstecken in die Nabe (3) aufgesetzt ist.

6. Vorrichtung zur Montage nach Anspruch 5, **dadurch gekennzeichnet, dass** das Haltemittel (4) in Form eines elastisch verformbaren Stücks ausgestaltet ist, das in Form eines C-förmigen Ringabschnitts mit einem U-förmigen Querprofil ausgeführt ist und im Bereich seines Außenflügels mindestens einen abweichenden oder einspringenden Teil umfasst, der das oder die Befestigungsstück(e) oder den oder die Flügel (4') bildet, wobei das Haltemittel (4) in einer Nut (6) der Achse (2) montiert ist.

7. Vorrichtung zur Montage nach einem der Ansprüche 1 bis 6, **dadurch gekennzeichnet, dass** die Radstruktur (1) mindestens eine hohle Speiche (7) umfasst, die aus einem Stück mit der Nabe (3) gebildet ist und auf dieser letztgenannten mündet, wobei die Mündungsöffnung eine Vertiefung (5) bildet.

8. Gegenstand oder Maschine, umfassend mindestens eine Radstruktur, **dadurch gekennzeichnet, dass** jede Radstruktur (1) auf einer Achse (2) mit Hilfe einer Vorrichtung zur Montage nach einem der Ansprüche 1 bis 7 montiert ist.
